Europäisches Patentamt

European Patent Office

Office européen des brevets

(19)

(11) Publication number:

**0 308 506**

**A1**

(12)

# EUROPEAN PATENT APPLICATION

published in accordance with Art. 158(3) EPC

(21) Application number: 87904953.4

(22) Date of filing: 29.07.87

Data of the international application taken as a basis:

(86) International application number:
PCT/JP87/00558

(87) International publication number:
WO88/01421 (25.02.88 88/05)

(51) Int. Cl.³: **G 09 G 1/02**

(30) Priority: 13.08.86 JP 189777/86

(43) Date of publication of application:
29.03.89 Bulletin 89/13

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: OTSUKA, Shoichi
16-16, Hinodai 4-chome
Hino-shi Tokyo 191(JP)

(72) Inventor: MURAOKA, Yutaka
2-5-504, Utsukidai 1067, Utsuki-cho
Hachioji-shi Tokyo 192(JP)

(74) Representative: Billington, Lawrence Emlyn et al,
HASELTINE LAKE & CO Hazlitt House 28 Southampton
Buildings Chancery Lane
London WC2A 1AT(GB)

(54) IMAGE PROCESSOR.

(57) An image processor in which a general-purpose bit plane is selected for output from a plurality of general-purpose bit planes (3-1, ...., 3-n), said selected bit plane having a pattern for effecting a predetermined processing for pixel data that are stored in a frame memory (2). The pixel data in the frame memory (2) are compiled in a predetermined manner depending upon the pattern data that is selected for output. Therefore, the processing mode can be easily changed with the pixel data that are stored in the frame memory (2).

EP 0 308 506 A1

Fig. 1

-1-

# DESCRIPTION

## PICTURE PROCESSING APPARATUS

### Technical Field

This invention relates to a picture processing apparatus for outputting pixel data upon subjecting the data to predetermined processing.

### Background Art

A picture processing apparatus is known in which pixel data stored in a frame memory are outputted upon being subjected to predetermined processing, such as filtering processing or gray level transformation.

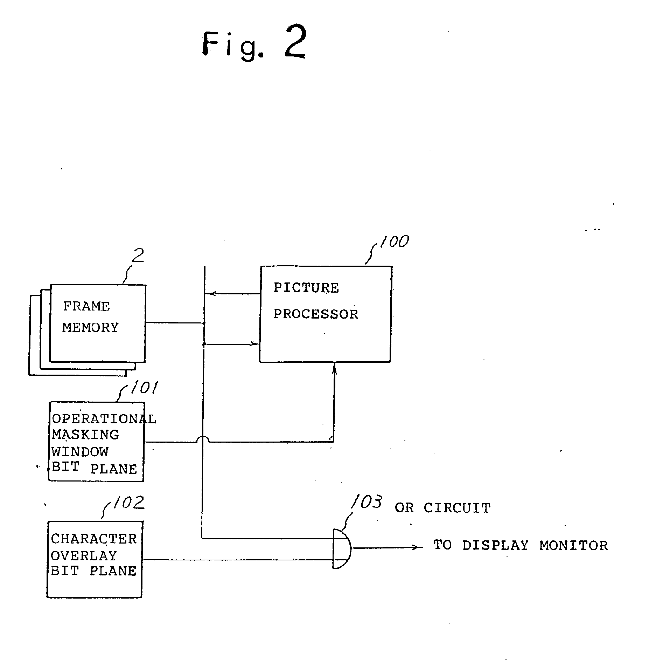

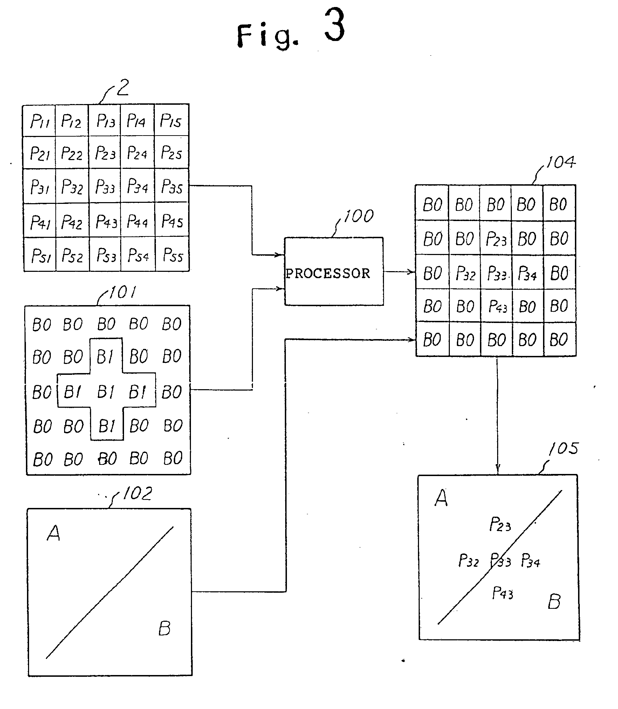

Fig. 2 is a block diagram of such a conventional picture processing apparatus, and Fig. 3 is a view illustrating a specific form of processing executed by the picture processing apparatus shown in Fig. 2.

In Fig. 2, a picture processor 100 reads in pixel data, in which one pixel comprises eight bits, from a plurality of frame memories 2, subjects the pixel data from the frame memories 2 to operational masking processing in accordance with the mask pattern of a window bit plane 101 for operational masking, and outputs the processed data. The pixel data of one pixel consisting of eight bits subjected to operational masking processing by the picture processor 100 is subjected to an OR operation with a character pattern from a character overlay bit plane 102 by an OR circuit 103 before being outputted to a display monitor such as a CRT.

The form of processing executed by this conventional picture processing apparatus will now be described with reference to Fig. 3.

In Fig. 3, one of the frame memories 2 is capable of storing pixel data $P_{11}$ through $P_{55}$ equivalent to e.g. 5 x 5 pixels, and each item of pixel data $P_{11}$ through $P_{55}$ is composed of eight bits. Thus, since each item of pixel data $P_{11}$ through $P_{55}$ is composed of eight bits, a picture having 256 tones can be expressed.

Though the operational masking window bit plane 101 also stores a 5 x 5 pixel mask pattern, each item of masking data in the mask pattern is composed of one bit. Accordingly, each masking bit is expressed as bit data "0" or "1" (indicated by B0 and B1, respectively, in Fig. 3).

The processor 100 subjects the pixel data $P_{11}$ through $P_{55}$ of the frame memory 2 to operational masking processing in accordance with each item of masking data in the operational masking window bit plane 101. For example, if an item of masking data at a predetermined row and column is "0", the pixel data in frame memory 2 corresponding to this row and column is outputted upon being made a value of "0". If an item of masking data at a predetermined row and column is "1", the pixel data in frame memory 2 corresponding to this row and column is outputted as is. The pixel data in frame memory 2 thus subjected to operational masking processing is shown at numeral 104 in Fig. 3.

A character pattern of the kind shown in Fig. 3 is stored in the character overlay bit plane 102. The OR circuit 103 superimposes the pixel data 104 subjected to the above-described operational masking processing and the character pattern in the character overlay bit plane 102 and outputs the data to a display monitor upon editing it into picture data shown at numeral 105 in Fig. 3. It should be noted that a cursor or the like designating predetermined display data may be stored as the character pattern.

In the picture processing apparatus described above, the processing applied to the pixel data $P_{11}$ through $P_{55}$ in frame memory 2 is decided by the single special-purpose operational masking window bit plane 101 and the single special-purpose character overlay bit plane 102. Accordingly, the pixel data $P_{11}$ through $P_{55}$ in the frame memory 2 is merely subjected to one type of special-purpose masking processing and one type of special-purpose character pattern overlay processing, and the user is not capable of altering the form of processing freely. The picture processing apparatus therefore lacks versatility. Furthermore, the shape of the operational masking window cannot be verified by being outputted directly to the display monitor.

Disclosure of the Invention

The present invention has been devised to solve

-4-

the aforementioned problems and its object is to provide a versatile picture processing apparatus in which it is possible to readily change the form of processing applied to pixel data stored in a frame memory.

In accordance with the present invention, there is provided a picture processing apparatus for storing pixel information as matrix data and subjecting each pixel data unit to predetermined editing processing, characterized by comprising a frame memory for storing the matrix data, arithmetic means for subjecting each item of pixel data of the picture information in the frame memory to processing, a plurality of general-purpose bit planes for storing pattern information stipulating a form of processing executed by the arithmetic means, and output means for selecting and outputting pattern information from these general-purpose bit planes.

Accordingly, the picture processing apparatus of the present invention selects from a plurality of general-purpose bit planes a general-purpose bit plane having a pattern for subjecting pixel data in a frame memory to predetermined processing, and makes it possible to readily change the form of processing applied to the pixel data stored in the frame memory so that the form of processing applied to the picture in the frame memory can be provided with versatility.

Brief Description of the Drawings

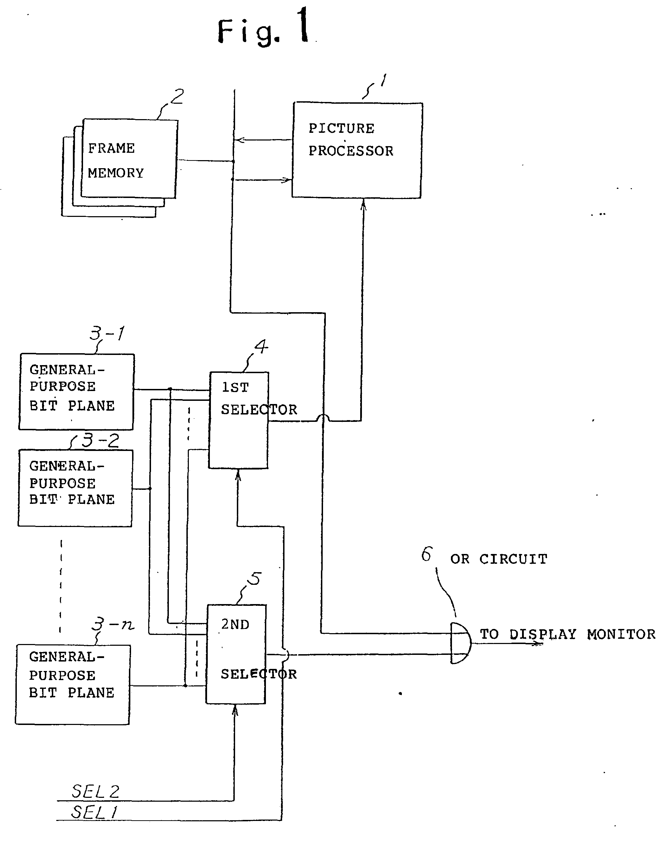

Fig. 1 is an explanatory block diagram illustrating an embodiment of a picture processing apparatus according to the present invention, Fig. 2 is an explanatory block diagram illustrating an example of the prior-art apparatus, and Fig. 3 is a view illustrating a specific form of picture processing.

Best Mode for Carrying Out the Invention

An embodiment of the present invention will now be described in detail with reference to the drawings.

Fig. 1 is a system block diagram of a picture processing apparatus according to the present invention. In Fig. 1, portions similar to those shown in Fig. 2 are designated by like reference characters and a description thereof is deleted.

In accordance with the present embodiment, n general-purpose bit planes 3-1 through 3-n are provided and not special-purpose bit planes such as the special-purpose operational masking window bit plane 101 and special-purpose character overlay bit plane 102 of the prior art. A mask pattern the same as that in the conventional operational masking window bit plane 101 is stored in a certain one of these general-purpose bit planes 3-1 through 3-n, and a character pattern the same as that in the conventional character overlay bit plane 102 is stored in a certain one of these general-purpose bit planes 3-1 through 3-n. Stored in others of these general-purpose bit planes are mask patterns and character patterns different from those in the conventional operational masking window bit plane 101 and character overlay bit plane 102.

These general-purpose bit planes 3-1 through 3-n are connected to a first selector 4 and a second selector 5. The first selector 4 selects one bit plane from among the bit planes 3-1 through 3-n in response to a select control signal SEL1 from e.g. a main processor (not shown) and delivers the one bit plane to the picture processor 1. Meanwhile, a second selector 5 selects one bit plane from among the bit planes 3-1 through 3-n in response to a select control signal SEL2 from e.g. a main processor and delivers the one bit plane to the OR circuit 6.

The picture processor 1 processes the pixel data from the frame memory 2 based on the pattern signal of the bit plane from the first selector 4 and applies the results to the OR circuit 6. The latter executes processing for superimposing the results of processing from the picture processor 1 and the pattern signal of the bit plane from the second selector 5, and outputs the results to the display monitor.

The operation of the picture processing apparatus constructed as set forth above will now be described.

The frame memory 2 stores pixel data to be processed. If, by way of example, a mask pattern similar to that in the conventional operational masking window bit plane 101 is stored in the general-purpose bit plane 3-1 and operational masking processing similar to that performed by the conventional picture processor 100 is executed by the picture processor 1, a selection signal for the bit plane 3-1 is outputted to the first selector 4 as the select control signal SEL1. Thus, the picture processor 1 is capable of subjecting the pixel data from the frame memory 2 to masking processing based on the mask pattern from the bit plane 3-1, and the results of this processing are applied to the OR circuit 6.

Further, if, by way of example, a character pattern similar to that in the conventional character overlay bit plane 102 is stored in the general-purpose bit plane 3-2, a selection signal for the bit plane 3-2 is outputted to the second selector 5 as the select control signal SEL2 when the results of operational masking processing from the picture processor 1 and the character pattern are superimposed as in the conventional apparatus. Thus, a video signal synthesized in the same fashion as the results of processing performed by the conventional apparatus and shown at e.g. numeral 105 in Fig. 3 can be delivered to the display monitor.

In the apparatus of the present embodiment, numerous other general-purpose bit planes are provided in addition to the general-purpose bit planes 3-1 and 3-2. Mask patterns and character patterns different from the abovementioned mask pattern and character pattern of bit planes 3-1 and 3-2 can be stored in these other general-purpose bit planes. The user is capable of selecting these general-purpose bit planes freely by means of the select control signals SEL1, SEL2. Thus, it is possible for the picture processor 1 to subject the pixel data in frame memory 2 to various types of masking processing. In addition, it is possible to subject the results of masking processing performed by the picture processor 1 to synthesizing processing with various character patterns.

In accordance with the present embodiment, a plurality of the general-purpose bit planes 3-1 through 3-n are provided, mask patterns and character patterns are stored in these general-purpose bit planes 3-1 through 3-n in advance, and the general-purpose bit planes 3-1 through 3-n can be selected by the select control signals SEL1, SEL2. Accordingly, a user is capable of altering the form of masking processing and synthesizing processing by means of the select control signals SEL1, SEL2, and it is possible to readily combine and execute masking processing based on a desired pattern and editing processing such as synthesizing processing.

Though an embodiment of the present invention has been described, the invention is not limited thereto but can be modified in various ways without departing from the scope of the claims.

Industrial Applicability

When a user desires to perform editing processing based on a pattern different from the pattern in a general-purpose bit plane presently selected, the picture processing apparatus of the present invention enables the user to freely select a general-purpose bit plane different from that of the presently selected general-purpose bit plane.

CLAIMS:

1.    A picture processing apparatus for storing pixel information as matrix data and subjecting each pixel data unit to predetermined editing processing, comprising:

a frame memory for storing said matrix data;

arithmetic means for subjecting each item of pixel data of the picture information in the frame memory to processing;

a plurality of general-purpose bit planes for storing pattern information stipulating a form of processing executed by the arithmetic means; and

output means for selecting and outputting pattern information from these general-purpose bit planes.

2.    A picture processing apparatus according to claim 1, characterized in that said arithmetic means comprises a picture processor and a logical operation circuit for character overlay.

3.    A picture processing apparatus according to claim 2, characterized in that the pattern information stored in said bit planes includes window patterns and character patterns.

4.    A picture processing apparatus according to claim 2, characterized in that said output means comprises a first selector for selecting pattern information and outputting the pattern information to the picture processor, and a second selector for selecting pattern information and outputting the pattern information to

0308506

the logical operation circuit.

0308506

# Fig. 1

# Fig. 2

# Fig. 3

2

| $P_{11}$ | $P_{12}$ | $P_{13}$ | $P_{14}$ | $P_{15}$ |
|---|---|---|---|---|
| $P_{21}$ | $P_{22}$ | $P_{23}$ | $P_{24}$ | $P_{25}$ |
| $P_{31}$ | $P_{32}$ | $P_{33}$ | $P_{34}$ | $P_{35}$ |
| $P_{41}$ | $P_{42}$ | $P_{43}$ | $P_{44}$ | $P_{45}$ |
| $P_{51}$ | $P_{52}$ | $P_{53}$ | $P_{54}$ | $P_{55}$ |

101

| BO | BO | BO | BO | BO |
|---|---|---|---|---|
| BO | BO | B1 | BO | BO |
| BO | B1 | B1 | B1 | BO |
| BO | BO | B1 | BO | BO |
| BO | BO | BO | BO | BO |

102

A

B

100

PROCESSOR

104

| BO | BO | BO | BO | BO |
|---|---|---|---|---|
| BO | BO | $P_{23}$ | BO | BO |
| BO | $P_{32}$ | $P_{33}$ | $P_{34}$ | BO |
| BO | BO | $P_{43}$ | BO | BO |
| BO | BO | BO | BO | BO |

105

A

$P_{23}$

$P_{32}$ $P_{33}$ $P_{34}$

$P_{43}$

B

0308506

International Application No  PCT/JP87/00558

**I. CLASSIFICATION OF SUBJECT MATTER** (if several classification symbols apply, indicate all) 3

According to International Patent Classification (IPC) or to both National Classification and IPC

Int.Cl$^4$    G09G1/02

**II. FIELDS SEARCHED**

| Minimum Documentation Searched 4 | |
|---|---|
| Classification System | Classification Symbols |
| IPC | G09G1/02, 1/06 |

Documentation Searched other than Minimum Documentation
to the Extent that such Documents are Included in the Fields Searched 5

| | |
|---|---|
| Jitsuyo Shinan Koho | 1971 - 1986 |
| Kokai Jitsuyo Shinan Koho | 1971 - 1986 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| A | JP, A, 59-173862 (Fujitsu, Ltd.)<br>2 October 1984 (02. 10. 84)<br>(Family: none) | 1-4 |
| A | JP, A, 60-144789 (NEC Corporation)<br>31 July 1985 (31. 07. 85)<br>(Family: none) | 1-4 |
| A | JP, A, 60-173587 (Ricoh Co., Ltd.)<br>6 September 1985 (06. 09. 85)<br>(Family: none) | 1-4 . |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search 2 | Date of Mailing of this International Search Report 2 |
|---|---|
| October 6, 1987 (06. 10. 87) | October 19, 1987 (19. 10. 87) |

| International Searching Authority 1 | Signature of Authorized Officer 20 |
|---|---|
| Japanese Patent Office | |